# EUROPEAN PATENT SPECIFICATION

(11) **EP 2 503 295 B1**
(45) Date of publication and mention of the grant of the patent: **14.05.2014**
(21) Application number: 11159827.2
(22) Date of filing: 25.03.2011
(51) Int. Cl.: G01D 4/00, H04Q 9/02, H02J 3/14, H02J 3/00

(54) **Communication module, point of entry electricity metering device, metering system of a metered user area and method for self organized regulating a power consumption via a point of entry electricity metering device in a metered user area of an electricity grid**
Kommunikationsmodul, Eingangspunktstrommessgerät, Messsystem eines gemessenen Benutzerbereichs und Verfahren für eine selbstorganisierte Stromverbrauchsregelung über ein Eingangspunktstrommessgerät in einem gemessenen Benutzerbereich eines Stromnetzes
Module de communication, dispositif compteur d'électricité au point d'entrée, système de mesure d'une zone utilisateur relevée et procédé pour la régulation auto-organisée d'une consommation électrique au moyen d'un dispositif compteur d'électricité au point d'entrée dans une zone utilisateur relevée d'un réseau électrique

(43) Date of publication of application: 26.09.2012
(73) Proprietor: Gemalto M2M GmbH, 81541 München (DE)
(72) Inventor: Breuer, Volker, 16727 Bötzow (DE); Wehmeier, Lars, 10407 Berlin (DE)
(74) Representative: Grevin, Emmanuel

(56) References cited:
- EP-A1- 2 290 329
- WO-A1-2009/097400
- WO-A2-2008/035989

## Description

The invention relates to a point of entry electricity metering device of a metered user area connectable to an electricity grid. A communication module is communicatingly connectable to the metering device, e.g. by insertion or a communication line connection or wireless connection. The invention relates to a point of entry electricity metering device of a metered user area of an electricity grid, the grid having a plurality of further metered user areas with a plurality of further point of electricity metering devices, wherein in said metered user area at least one power consumption device can be positioned in circuit line connection to the electricity grid and said point of entry electricity metering device.

Further, the invention relates to a metering system of a metered user area comprising a point of entry electricity metering device and at least one consumption device of said metered user area connected by electric connection wiring means to an electricity grid and to said point of entry electricity metering device. Further, the invention relates to a method for regulating a power consumption via a point of electricity metering device in a metered user area of said electricity grid.

Energy in the form of electricity can rarely be stored or only within certain conditions. Thus, it is essential for an electricity grid provider as well as for an end user to control or at least monitor the consumption of electric power in accordance with providing electric power to the grid. Among others this aims for a more or less homogenous power consumption and/or a homogenous availability of electric power in a rather broad range of power potential and independently of actual usage times. Nevertheless naturally, it can be assumed that still times will occur of rather low cost rate availability of electric power and times will occur of rather high cost rate availability of electric power.

As for instance known from US 2010/060479 A positive attempts have been made to provide smart metering systems to an end user which are based on a monitoring device. The monitoring device receives information from a smart metering system and displays current power usage and current costs of consumption, thus allowing the end user to have more or less easily visualized possibilities of optimizing electric power consumption. However, whereas such monitoring systems as such are advantageous, the complexity and dynamics of a cost rate development on the one hand and power consumption on the other hand result in that an end user is only rarely in the situation to optimize effectively by manual interference his power consumption. Furthermore it is believed that such systems based on continuous or instantaneous interaction of the end-user are less efficient especially for night low rate hours.

On the other hand, elaborated concepts are available meanwhile to provide complex electricity grid information as well as electricity consumption values to an individual customer location, be that it may by internet communication or other online systems. For instance US 2008/0177678 A1 discloses a method for communicating between a utility and an individual customer location. The method allows to provide each individual customer location with an advanced utility meter in principle. Nevertheless, such basic concept still lack feasibility up to contemporary conditions of the electricity grid on the one hand and the end user performance on the other hand.

US 2010/0131117 A1 provides a method and system which allows transmitting an energy consumption adjustment message to at least one electrical device, commanding the electrical device to adjust its electrical energy consumption accordingly. This concept implies receiving an energy consumption control command at a consumer side and determining energy consumption adjustment for at least the electrical device, based on the energy consumption control command. It has turned out that centralized concepts as such still are too weak for addressing all demands of a complex and fast developing power availability and consumption.

WO 2008/097400 A1 provides a system and method for monitoring and controlling the power consumption of a power consuming device, wherein the power usage of a power consuming device may be measured and monitored. Monitoring data may be stored and optionally send to a controlling device on a data network. In an embodiment a home energy network may be composed of a controller and a distributed network of power monitoring and several control nodes. The several control nodes may communicate with the controller, any optional repeaters and each other via a network. The controller may be composed of a single base station with a display or may be separated into a separate node control device and display device. The controller may send either raw data gathered from the nodes or processed/aggregated data to a remote server. In particular, a dashboard may be present for visualization of energy consumption from one or multiple sources of energy over time. The visualization may include the price of electricity over time of each of the various sources of energy, whether the pricing is based on a fixed peak/off-peak schedule, or realtime pricing data gathered over the internet, cellular networks, or other communication networks. When a price of electricity drops below a threshold, the controller may send a message or the like.

WO 2008/035989 A2 provides a method of effecting a change to one or more utility meters at one or more customer premises. One or more job summary records from a central server are transmitted to a wireless device operated by a utility meter installer, displaying at least part of the job summary records on the wireless device, accepting an installer selection of the displayed job summary records, transmitting job detail records from the central server to the wireless device, effecting the change specified in the job detail records, modifying the job detail records and transmitting the modified job detail records to the central server.

US 2010/0321574 A1 discloses advantageous concepts for organizing a regulated power consumption within a metered user area, wherein power cost schedules on the one hand and user preference data on the other hand are used to determine a device control schedule. The schedule causes a specific device to modify its power consumption based on the device control data. To execute this concept, the point of entry electrical meter has a shut-off or turn-on switch and is connected to a power grid of a power supplier and the metered user area. The point of entry electrical meter as such has no further functions for supporting the proposed concept, whereas instead the power supplier and the point of entry electrical meter is connected to a master power control unit. The latter can be formed as an appliance such as a television connectable to a power monitoring unit, or a a display panel or the like. The master power control- and display-device, e.g. a television, in turn can be communicatingly connected to energy consumption devices like an oven or a refrigerator.

It has turned out that this system can be improved in its physical entities and communication paths. Last but not least, still scheduling means as proposed in US 2010/0321574 A1 might turn out to be less flexible in view of complex and fast developing energy consumption and electric power availability in the electricity grid.

EP 2 290 329 A1 discloses a system including a utility meter that measures consumption of a utility within a space occupied by user. A wireless fault detector is associated with the utility located within the space and a wireless transmitter of the utility meter that receives a fault message from the fault detector confirms consumption of the utility within the space and transmits a fault message that identifies the space to the utility company. The meter may include requests for cumulative readings or for consumption rates in units per time period. A processor may receive load shedding instructions from utility company. Load shedding instruction may cause a processor to transmit an instruction to a controller of an air conditioner instructing the air conditioner to shut-down for a predetermined period during periods of heavy utility loading.

It is desirable to provide an improved concept and a physical realization to support an improved method for regulating a power consumption via a point of entry electricity metering device in the metered user area of an electricity grid.

This is where the invention comes in, the object of which is to specify an apparatus and a method for regulating a power consumption in a metered user area of an electricity grid, wherein the apparatus and method shall be improved in view of the prior art. In particular, the apparatus and method shall be suited to provide an alternative concept as compared to the centralized approaches disclosed in the prior art. In particular, the apparatus and method shall be adapted to regulate power consumption via a point of entry electricity metering device in a metered user area of an electricity grid, wherein the grid has a plurality of further metered user areas with a plurality of further point of entry electricity metering devices.

The object with regard to the apparatus is also solved by the invention with a point of entry electricity metering device as mentioned in the introduction, wherein, according the invention, the features of claim 1 are provided.

The object with regard to the apparatus is also solved by a metering system with the features of claim 20 of a metered user area, comprising a point of entry electricity metering device.

The object with regard to the method is solved by the invention with a method for self-organized regulating a power consumption of claim 21.

The concept of the invention has recognized that an effective way to aim for a homogenous electricity consumption can be based on a self-organized regulation of power consumption via a point of entry electricity metering device in a metered user area of an electricity grid. In contradistinction to most of the prior art approaches, the concept of the invention favors a self-organized concept. On the other hand, the concept of the invention recognized that it is desirable to provide a rather simple approach which is technically feasible and nevertheless right to the demands of contemporary electricity grids and user area demands.

According to the invention, it has been recognized that an apparatus and method for a self-organized regulation of power consumption via a point of electricity metering device in a metered user area of an electricity grid should not only have available information with regard to data of power consumption and data of power rate costs. Also in addition an identity of the metered user area of the electricity grid shall be inevitably and distinctively identifiable from further metered user areas which also exist among the plurality of user areas in the electricity grid. The invention recognized that the identity shall in principle not only be available to the point of entry electricity metering device but also to an electricity provider on the one hand and a power consumption device on the other hand. The former is necessary to distinguish the individual end user metering areas at the side of the electricity provider. The latter is necessary to allow an unambiguous assignment of each power consumption device to the point of entry electricity metering device of the assigned metered user area. Thus, the claimed inventive concept provides communication means respectively adapted to communicate a physical identifying feature. The unambiguous assignment by means of the identifier prevents that power consumption devices of further metered user areas are mixed up with the specified power consumption device of the specified metered user area.

The above approach becomes essential within the proposed concept of the invention wherein at least the data of power consumption of the metered user area and an identifier for the point of entry electricity metering device are transmitted from the point of entry metering device via the mobile communication network. Advantageously, thereby costly and expensive wiring are omitted in the metered user area. Also a secure and reliable connection is provided between the point of electricity metering device for the user area and the electricity provider platform for instance,

In summary, the apparatus, system and method provide a reliable concept for self-organized regulating a power consumption via a point of entry electricity metering device. The concept itself relies on a self-organized regulation of the power consumption preferably without any or without instantaneous user interaction. Thus in a self-organized way power consumption is concentrated an low cost rate times preferably without user interaction.

Particular advantageous this can imply in a further developed configuration that data of power rate costs received from the electricity provider platform in a point of entry electricity metering device indeed need not necessarily be evaluated into a schedule of fixed instructions for a power consumption device. More effectively, in a preferred and further developed configuration, the data of power rate costs may be evaluated into a trigger message comprising a simple indication of a preferred or allowed time of power consumption. Thus, an evaluation unit of the point of entry electricity metering device and/or a logic unit of a power consumption device can be designed in a rather low cost and clear design architecture.

In a preferred configuration it has been recognized that the data of power rate costs and the identifier for the point of entry electricity metering device need not necessarily be internally communicated within the metered user area -i.e. to the power consumption devices in the metered user area- via the mobile telephone communication network. In a preferred configuration, a simplified, for instance free-frequency version of a mobile telephone communication network, may be used. Alternatively, local area communication means like those identified in the dependent claims may be used. Preferably, an internal communication interface of the communication module and/or an application layer of a point of entry electricity metering device is adapted for communicating the data of power rate costs and the physical identifying feature between the point of entry electricity metering device and a power consumption device by internal communication means wherein the internal communication means are different from the communication means of the electricity provider side receiver - and/or transmitter - circuitry. In particular, the internal communication means are different from a means for communication via a mobile communication network.

Developed configurations of the invention are further outlined in the dependent claims. Thereby, the mentioned advantages of the proposed concept are even more improved.

In a preferred development, the identifier for the point of entry electricity metering device is formed as physical identifying feature. Preferably the identifier distinctively identifies said point of entry electricity metering device from a further point of entry electricity metering device assigned to a further metered user area of the electricity grid.

The physical identifying feature in principle can be realized in various forms, in particular in form of a sequence of signs, like a number or a code or the like. Particular preferred is a grid number of the point of entry electricity metering device which mostly is available already with an existing point of entry electricity metering device in the electricity network. Also, any dedicated number of a power provider is, as such, in principle preferred for being used as a physical identifying feature according to the preferred developed configuration. For instance, a contract number, a customer number or the like number or code of the power provider is suited.

In a preferred development particular advantageously the point of electricity metering device in a first alternative can be provided as an apparatus adapted for determining power consumption of the metered user area. Integrally the metering device also is provided as an intelligent unit by means of the communication module and further has an application layer and an internal communication terminal. The metering device further comprises the communication module, be that it may as an interchangeable communication module or as a fixed communication module.

Thus, preferably, the identifier in principle can be adapted to identify the electricity metering device as such. In particular, this variant is to be preferred in the case a communication module is fixingly connected to the point of electricity metering device.

In a preferred embodiment the internal communication via the internal communication interface is privacy protected. In another preferred variant the communication module can be provided as an interchangeable or replaceable module which can be inserted on demand into a point of entry electricity metering device. An identifier for distinctly identifying the communication module from other communication modules is particularly preferred for this case. In other words, in this latter variant, the point of entry electricity metering device is distinctly identified from further point of entry electricity metering devices assigned to further metered user areas of the electricity grid by means of the identifier of the communication module.

Particularly preferred, a communication module is provided with means for insertion into a holder of a point of entry electricity metering device or a power consumption device. Thus, this development provides an easy way for interchanging or replacing a communication module in a point of entry electricity metering device.

Indeed the communication module can be easily provided in a power consumption device. Thus, in a particularly preferred embodiment, a single power consumption device may take the functions of a point of entry electricity metering device as outlined according to he concept of the invention. In principle, in the latter development, each power consumption device may form a point of entry electricity metering device wherein the metered user area is defined by the power consumption device and the devices connected with said power consumption device.

In a further preferred embodiment, the physical identifying feature for the point of electricity metering device is adapted to form a key for a privacy means. In particular, it has been considered as favorable to provide a coding unit in the communication module, wherein the physical identifying feature is codable and/or encodable.

Accordingly, in a preferred development, the internal communication interface and/or the receiver- and/or transmitter-circuitry is adapted to communicate the physical identifying feature in coded form. Thus, particularly preferred, the physical identifying feature can be transmitted to the provider platform and/or the point of entry metering device in coded form. Thus, in a preferred embodiment, the physical identifying feature also can be transmitted to a power consumption device of the metered area in coded form. Particularly preferred, also the data of power rate costs and/or the data of power consumption can be transmitted in coded form accordingly. The physical identifying feature and the data of power consumption can be communicated in separate data units in a first variant or, in a second variant, can be combined in a single data unit. In the latter alternative, the physical identifying feature, for instance, can be used to code the data of power consumption and/or the data of power rate costs. In summary, using the physical identifying feature as a privacy means key allows a particularly secure communication, although the basic concept of the invention uses a mobile communication network and a self-organized regulation concept in principle.

The communication module of a particular preferred development is adapted for communication to a provider platform on the one hand and to a point of entry electricity metering device and/or a consumption device on the other hand.

It has turned out that, in a particularly preferred development, the provider side transmitter- and/or receiver circuitry can be adapted for communication with a provider platform in a particular simplified form. Particularly preferred is that the transmitter circuitry is adapted for transmitting data of power consumption and/or the physical identifying feature via a dedicated signal of the mobile communication network. In particular, a dedicated control channel (DCCH) is favorable.

Further, particularly preferred is that the receiver circuitry is adapted for receiving data of power rate costs from the provider platform via a non-dedicated signal of the mobile communication network. Particularly preferred is a broadcast control channel (BCCH) communication. A mobile telephone communication network, in particular a mobile cellular communication network, in particular a mobile telephone communication network, can be used; preferably a GSM- or UMTS-based or the like network for a mobile communication.

Whereas in principle the transmitter- or receiver-circuitry can be adapted merely for communication via a mobile communication network, it turned out to be favorable in a particular specialized development that the transmitter- and/or receiver circuitry is adapted additionally for communication via the internet or other wireless or wired local area network.

In particular this leads to a developed configuration wherein the transmitter- and/or receiver circuitry is also adapted to provide an internal communication terminal adapted for communicating the data of power rate costs and the physical identifying feature between the point of entry electricity metering device and a power consumption device of the metered user area.

With regard to the point of entry metering device, preferred developed configurations of the invention are further outlined in the further dependent claims. Thereby, the mentioned advantages of the proposed concept are even more improved.

As outlined above, a trigger message is particularly preferred for triggering the power consumption of the power consumption device. In a particularly preferred simple form, a trigger message may provide, advantageously restricted to provide, a start or stop point of time for allowed power consumption. Thus, each power consumption device as outlined with the metering system of the invention may use a logic unit for triggering on its own preference the power consumption. Thus, a detailed centralized scheduling is preferably omitted by the preferred development and replaced by a self-organized regulation scheme.

In a preferred development, an application layer of the point of entry electricity metering device comprises a conversion unit for converting a mobile communication network form of a signal into an internal form of a signal. The internal form of a signal may for instance be also a mobile communication network form of a signal, e.g. in a free frequency band or the like. Also, any other form of a signal suitable for a local area communication, like a power line signal, Wimax signal, WLAN signal or the like, is in principle possible. Respectively, an internal communication terminal is adapted in a preferred configuration.

The point of entry electricity metering device in particular provides a measuring unit adapted for measuring a power consumption of the metered user area. Preferably a signal interface is adapted for transmitting the respective data of power consumption of the metered user area, in particular from the measuring unit, to the signal interface of the communication module. Thus, a communication modules task is to concentrate all available data of the metered user- namely the power consumption, the identifier and the power rate costs, for communication to the electricity provider and the point of entry electricity metering device on the other hand.

In a preferred embodiment, a holder for the communication module in the point of entry electricity metering device may provide a power- and/or an internal- communication interface and/or a signal-interface to the communication module.

Additionally, but not necessarily, in a preferred development, the point of entry electricity metering device is provided with a user interface, like a control unit or the like. In a preferred development, the control unit has an input/output terminal for receiving/displaying user settings and powered consumption related data. Although the basic concept of the invention is related with a self organized regulating power consumption, nevertheless, by means of the control unit, an end user shall have the possibility to interfere on its demand, for instance in exceptional situations, which may overrule an optimized self-organized powering consumption regulation.

For a more complete understanding of the invention, the invention will now be described in detail with reference to the accompanying drawing. The detailed description will illustrate and describe what is considered as a preferred embodiment of the invention. It should of course be understood that various modifications and changes in form or detail could readily be made without departing from the spirit of the invention. It is therefore intended that the invention may not be limited to the exact form and detail shown and described herein, nor to anything less than the whole of the invention disclosed herein and as claimed hereinafter.

In the drawings:
- Fig. 1: shows a schematic view of a metered user area and other metered user areas in an electricity grid, wherein a point of entry electricity metering device is connected to an electricity provider platform on the one hand and a number of power consumption devices of the user area on the other hand;
- Fig. 2: a flow chart of basic method steps of a preferred embodiment of a method for self-organized regulation of a power consumption via a point of entry electricity metering device in a metered user area of an electricity grid as shown in the preferred embodiment of Fig. 1.

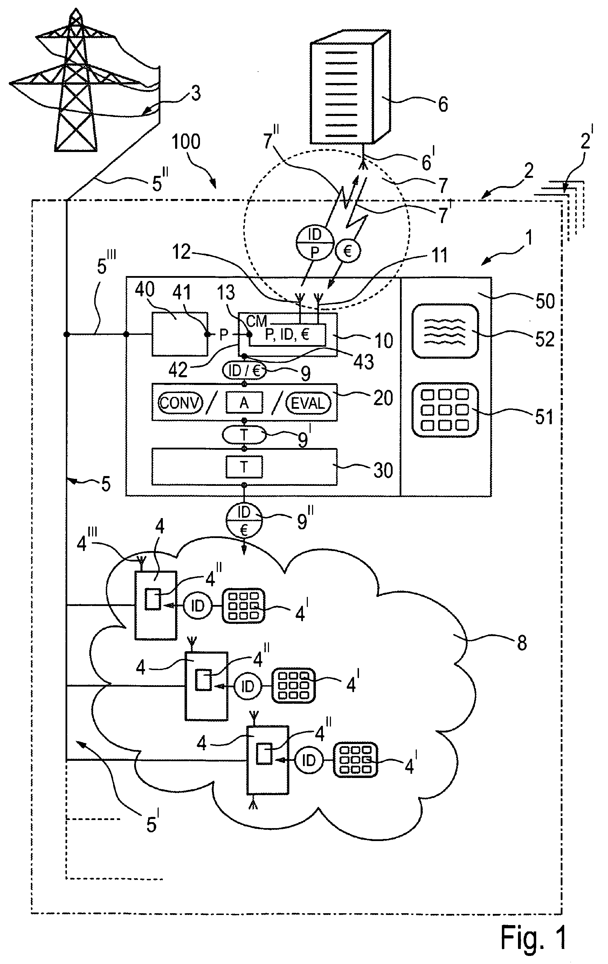

Fig. 1 shows schematically a metering system 100 comprising a point of entry electricity metering device 1 and at least one consumption device 4 in a metered user area 2. The metering system 100 of the preferred embodiment is connected via a communication module 10 in the point of entry electricity metering device 1 to a provider platform 6 of an electricity provider. The platform can be formed as a server or other provider means, which is communicatable connectable to the communication module 10 of the point of entry electricity metering device 1 of the end user. Further, the metering system 100 is connected via the metered user area 2 to the electricity grid 3, namely by means of a circuit line connection 5, which extends from the metered user area 2 by electric connection wiring means into the electricity grid 3. Similarly further metered user areas 2' are connected to the electricity grid 3, which are not shown in detail in Fig. 1 but only schematically.

The power consumption of the power consumption devices 4 in the metered user area 2 in principle is determined in the point of entry electricity metering device 1 as follows. The electricity consumption devices 4 are connected by suitable circuit line network connections 5' in the metered user area 2, like for instance electric wiring in a residence or a business location. The circuit line connection 5 is connected to the metered user area circuit line network 5' and by branching, as indicated in the lower part of Fig. 1, to a multitude of power electricity consumption devices 4 in the metered user area 2. The electric line connection network 5' is extended by the circuit line connection 5 to the electric connection wiring means 5" to the electricity grid 3. The electric connection wiring means 5" is outside the metered user area 2 and the electric network 5' extends in the electric user area 2 for connection of the electricity consumption devices 4 to the circuit line connection 5. Further, a suitably adapted electric connection 5'" is connected to the circuit line connection 5 and a measuring unit 40 for measuring a power consumption of the metered user area 2. As a result of the measuring unit 40 a data of power consumption P in the metered area is provided via a measuring unit signal interface 41 to the signal interface 11 of the communication module 10. The signal interface 41 of the measuring unit 40 can be provided in a holder 42 or in connection with a holder 42 as shown schematically in Fig. 1. The communication module 10 can be interchangeable inserted into the holder 42 thereby connecting the signal interface 11 of the communication module 10 and the signal interface 41 of the measuring unit 40 for providing a power consumption signal P of the metered user area 2 from the measuring unit 40 of the point of entry electricity metering device 1.

Thus, on the one hand the power consumption devices 4 -like a refrigerator, a laundry machine, an oven or a TV set or the like- can consume electric power delivered by circuit line connection 5 from the electricity grid 3 and power consumption can be determined and data thereof can be provided to the communication module 10 as outlined above.

As will be described further the holder 42 also forms a measuring unit signal interface 41 for providing power to the communication module 10 and an internal communication interface 43 adapted for communicating data to an application layer 20 of the point of entry electricity metering device 1.

The communication module 10 in this embodiment has a receiver circuitry 11 and a transmitter circuitry 12 on the provider side, which in the drawing of Fig. 1 is symbolized each by an antenna as an air interface. Thereby, the communication module 10 is connectable to an electricity provider platform 6 via a cellular communication network 7, for instance in this embodiment an UMTS network. The provider platform 6 on the other hand has a communication circuitry, which is symbolized by a respective antenna 6'. Thus, data reception 7' comprising data of power rate costs EUR from a provider platform 6 is possible via the receiver circuitry 11. A data transmission 7" comprising data of power consumption P of the metered user area 2 as well as an identifying feature ID for the point of entry electricity metering device 1 is possible via the transmitter circuitry 12 to the provider platform 6. The physical identifying feature ID for the point of entry electricity metering device 1 can be inputted by an end user by means of a control unit 50, for instance by an input panel like a keyboard 51 as shown in Fig. 1. The control unit 50 also has a monitor 52 for monitoring input, and further data, in particular data of power consumption P and data of power rate costs EUR.

Whereas the data of power rate costs EUR are transmitted in a data reception 7' and are communicated over the mobile communication network 7 in a non-dedicated general broadcast channel BCCH, the transmitted signal from the communication module 10 to the provider platform 6 in a transmission signal 7" is performed over a dedicated channel of the mobile communication network, here in a DCCH.

In an alternative embodiment -not shown here- the communication module is also adapted to read a physical identifying feature ID for the point of entry electricity metering device 1 from the point of entry electricity metering device 1 via the internal communication interface 43. This is particular preferable in the case the physical identifying feature ID is available already in the point of entry electricity metering device 1 in the form of a grid number. However, also any other physical identifying feature ID is possible to be used in the preferred embodiment shown in Fig. 1, like identicated number of a power provider which may be inputted by the keyboard 51. A dedicated number like a particular contract or customer number can also be available in the communication module 10 in an alternative embodiment. Thus, a communication module 10 can be provided by an electricity power provider together with a contract and power consumption due to the contract of contract number ID is possible by means of insertion of the communication module 10 into the holder 42 of the point of entry electricity metering device 1.

Consequently, as described above all important data for providing a self-organized regulation of power consumption via the point of entry electricity metering device 1 is made available in the communication module 10 as indicated in the communication module data set CM in Fig. 1, namely the data of power consumption P, the physical identifying feature ID and the data of power rate costs EUR.

Further, as shown in the embodiment of Fig. 1, the physical identifying feature ID is also made available by any kind of input means 4' to the logic unit 4" of a power consumption device 4. Thus, the power consumption device 4 is ready for comparison of the correct physical identifying feature ID upon consuming electricity from the circuit line network 5'.

Further communication between the point of entry electricity metering device 1 and the at least one power consumption device 4 for allowing a self-organized power consumption regulation is as follows.

In the present embodiment, the communication module 10 is communicatingly connected via an internal communication interface 43 with the point of entry electricity metering device 1. The internal communication interface 43 is adapted for communicating by signal 9 the data of power rate costs EUR and the physical identifying feature ID to an application layer 20 of the point of entry electricity metering device 1. The application layer 20 has an evaluation logic EVAL wherein the data of power rate costs EUR are evaluated and a trigger message 9" is provided in the end. The trigger message 9" is suited for triggering the power consumption device 4 in a way which allows the power consumption device 4 to decide on its own whether power consumption is favorable or power consumption should be avoided. The trigger message 9" is coded in an application processing unit A of the application layer 20. Upon coding the data of power rate costs and/or the trigger message 9", the physical identifying feature ID is used as a privacy key means. Finally, in a conversion unit CONV, the mobile communication network form of a signal 9 for the data is converted to an internal form of a signal 9'. The internal form of a signal 9' thus is compatible to be transmitted by an internal communication terminal 30 of the point of entry electricity metering device 1 to a local area network 8.

The communication over the internal communication terminal 30 uses in the instant case a CDMA terminal unit T for communicating the data of power rate costs EUR in form of the coded triggering message and also the physical identifying feature ID in coded form to the wireless local area network 8. The WLAN also connects all power consumption devices 4 in the metered user area 2.

As explained above, all consumption devices 4 are registered in the local area network 8 by means of the physical identifying feature ID. Thus, said consumption devices 4 are in a state of being able to compare the inputted physical identifying feature ID stored in the logic unit 4" thereof with the physical identifying feature ID communicated from the internal communication terminal 30 of the point of entry electricity metering device 1. Thus, it is guaranteed that only those power consumption devices 4 in the correct metered user area 2 indeed perform a self-organized regulation of power consumption according to the power rate costs EUR transmitted by the internal communication terminal 30. In particular the mentioned said power consumption devices 4, which are not capable of having stored said physical identifying feature ID or have another physical identifying feature stored therein, are not part of the self-organized energy consumption regulation.

In particular, each power consumption device 4 has a receiver circuitry symbolized as an antenna 4'" which is capable of receiving and interpreting a trigger message 9". The coding of the trigger message 9" may be performed in the logic unit 4" which, in turn, triggers the power consumption device 4 for power consumption.

As the scenario described above usually effects also neighbored devices and the communication between the internal communication terminal 30 and the local area network 8 may indeed also extend through walls, streets and the like to other receivers and transmitters -like for instance those of further metered user areas 2'- the instant concept indeed guarantees a secure way to direct the mentioned physical identifying feature ID and power rate costs EUR only to those power consumption devices 4 which indeed are dedicated to the intended metered user area 2. Further measures may be used to even better perform this cost communication and exclude errors. One of these measures is for instance a practicable repeat rate and a design of a certain form or message head for the trigger message or the like.

A broadcast for broadcasting the physical identifying feature ID and/or the costs of power rate EUR, in particular the trigger message 9", can be permanently or timely stacked or, in a certain repetition, repeat frequency. Also an information or announcement for the next broadcast may be included. In particular, an information or announcement of a next change of power rate costs may be included. A power rate of costs can be transmitted as a development of costs over time in absolute or relative values. Also the tendency of change (up or down) may be implemented in a trigger message 9".

Further, privacy of the communication is guaranteed in the instant embodiment due to the coded form of transmission. The coding is effectively performed by using the physical identifying feature ID as a privacy means key.

For control of a correct communication in the present embodiment, the power consumption devices 4 have an above mentioned control unit 4' monitoring the physical identifying feature ID and monitoring the state of broadcast, in particular the actual state of receiver conditions. This monitoring of broadcast condition and broadcast code enables the user to check whether or not an energy consumption device 4 is already taking part in the self-organized power regulation in the metered user area 4.

For instance, the monitor of the power consumption device 4 and/or the monitor 52 of the point of entry electricity metering device 1 may be suitable to indicate that the broadcast and receipt of a trigger message 9" is active. For instance, a power consumption device 4 may indicate that it is capable to receive data from the point of entry electricity metering device 1. This can be confirmed by an acoustic signal. Also a visual confirmation can be indicated on a monitor of the power consumption device 4 and/or on the monitor 52 of the point of entry electricity metering device.

For instance the power consumption devices 4 are set such that they consume power only in the case the trigger message indicates that the energy costs are below a certain threshold and will have a direction only lowering the energy costs. A comparison of the logic 4" in the consumption device 4 will be able to determine whether this allows for running a certain power consumption program, like a laundry washing program or the like. This self-organized regulation releases the central point of entry electricity metering device 1 from complicated logic and calculation methods and also avoids complicated power use schedules which, indeed, can be avoided and make no sense within fast developing and complex energy cost- and power-consumption scenarios.

Thus, already with the above mentioned features indicated, a very stable self-organized modus of power regulation in the metered user area 2 can be upheld. Nevertheless, brute force calculation power is avoided on basis of the concept of the invention.

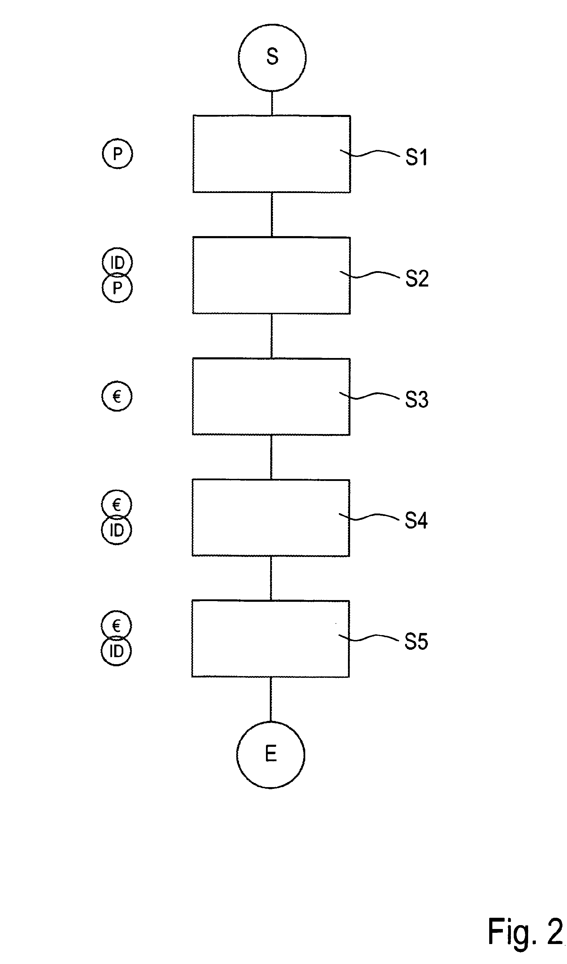

Fig. 2 depicts a flowchart of the most important method steps for a method of self-organized regulation of power consumption as explained above via a point of entry electricity metering device 1 in a metered user area 2.

The starting step S may include a system initialization and a check of interfaces and/or broadcast communication channels, i.e. the mobile cellular telephone communication network 7 and the local area network 8.

In a first step S1 thereafter, a power consumption signal P of said metered user area 2 is received, which indicates the power consumption P of the user area 2 to the communication module 10 of the point of entry electricity metering device 1. The communication in method step S1 may be at best performed over an electric connection wiring means 5" between the circuit line connection 5 of the network of power consumption devices 4 to the electricity grid 3 and to the point of entry electricity metering device 1. The circuit line connection 5 is connected to the electricity metering device 1 via the electric connection wiring means 5" and connected to the power consumption devices 4 via the circuit line network as shown in Fig. 1.

In a further method step S2, data of power consumption P of the metered user area 2 and a physical identifying feature ID for the point of entry electricity metering device 1 are transmitted to an electricity provider platform 6 via a mobile communication network 7. The communication via the mobile communication network 7 may be performed in a dedicated and/or non-dedicated channel as explained above and may depend on the situation and availability of broadcast capacity. In general, the communication over the mobile cellular telephone communication network 7 is considered to be safe and reliable. Thus, on the one hand, the electricity provider can assume that a secure report of power consumption P is received by the provider platform 6. On the other hand, the end user can rely on highly actual and secure transmission of power rate costs EUR.

In a further method step S3, the data of power rate costs EUR are received from the electricity provider platform 6 via the mobile communication network 7 as explained above.

The further method steps S4 and S5 apply to an internal communication which securely effects only the self-organized power regulation inside the intended metered user area 2 as explained above and also is secured sufficiently as privacy communication as explained above. In a method step S4, the signal 9 carrying the data of power rate costs EUR is converted in an internal form of signal 9' carrying the data of power rate costs EUR and the physical identifying feature ID for the point of entry electricity metering device 1. The internal form of signal 9' is compatible with an adopted form of local area network 8. Although a local area network 8 may also in principle use a mobile telephone communication network as a communication basis, however, other local area network concepts, like those claimed in one of the dependent claims, are less power-consuming and more adapted to the situation in, in particular, private residences or business locations.

In a method step S5, the data of power rate costs EUR and the physical identifying feature ID for the point of entry electricity metering device 1 are communicated to the at least one power consumption device 4 by means of a trigger message 9" as explained above.

A response of the power consumption device 4 to the point of entry electricity metering device 1 in principle is not mandatory and, therefore, is not listed in Fig. 2; in principle, the method can end at point E e.g. could be caused, stopped or repeated in a suitable sequence or update sequence according to the demands and time development of power rate costs EUR or consumption of energy P. However, nevertheless, a single or repeated response of a power consumption device 4 to the point of entry electricity metering device 1 can be useful, for instance upon confirming that a broadcast receipt is readily working via receiver 4'" in a power consumption device 4. Also a backup or confirming communication from the power consumption device 4 to the point of entry electricity metering device 1 via a power line communication over circuit line 5 or additional or alternatively over a local area network 8 could be used as a fallback position in the case a power line communication over circuit line 5 should not work.

## Claims

1. Point of entry electricity metering device (1) of a metered user area (2) connectable to an electricity grid (3), the grid (3) having a plurality of further metered user areas (2') with a plurality of further point of entry electricity metering devices, wherein in said metered user area (2) at least one power consumption device (4) can be positioned in circuit line connection (5) to the electricity grid (3) and said point of entry electricity metering device (1) having:
- electric connection (5"') to the electricity grid (3) and to said at least one power consumption device (4) of said metered user area (2)
- a communication module (10), for the point of entry electricity metering device (1) of the metered user area (2) connected to an electricity grid (3), having:
- a signal interface (13) adapted for receiving a power consumption signal (P) for said metered user area (2) from the point of entry electricity metering device (1) of said metered user area (2);
- an electricity provider side receiver- and/or transmitter-circuitry (11,12), wherein
the receiver circuitry (11) is adapted for receiving data of power rate costs (EUR) from a provider platform (6),
the transmitter circuitry (12) is adapted for transmitting data of power consumption (P) of the metered user area (2) to the provider platform (6);
- an internal communication interface (43) for communicating data with the point of entry electricity metering device (1); wherein
- the receiver- and/or transmitter circuitry (11, 12) is adapted for communication via a mobile communication network (7) and
- the transmitter circuitry (11, 12) is adapted for transmitting a physical identifying feature (ID) for the point of entry electricity metering device (1) in combination with the data of power consumption (P) of the metered user area (2) such that the point of entry electricity metering device (1) is identifiable and assignable to the metered user area (2), and
- the internal communication interface (43) is adapted for communicating the data of power rate costs (EUR) and the physical identifying feature (ID) to the point of entry electricity metering device (1)
- an application layer (20) for converting an internal signal (9') from the communication module (10) to an internal communication terminal (30), wherein
- the internal communication terminal (30) is adapted for communicating the data of power rate costs (EUR) and the physical identifying feature (ID) between the application layer (20) and the at least one power consumption device (4) of the metered user area (2).

2. Point of entry electricity metering device (1) according to claim 1 **characterized in that** the application layer (20) comprises an application processing unit (A) having an evaluation logic (EVAL) for evaluating data of power rate costs (EUR) and providing a trigger message (9") for triggering, a power consumption of the power consumption device (4).

3. Point of entry electricity metering device (1) according to claim 1 or 2 **characterized in that** the application layer (20) comprises an application processing unit (A) having a conversion unit (CONV) for converting a mobile communication network form of a signal (9) into an internal form of a signal (9').

4. Point of entry electricity metering device (1) according to claim 3 **characterized in that** the internal form of a signal (9') is adapted to a form of a signal selected from the group consisting of:
- power line signal, WIMAX-signal, WLAN signal, mobile communication network signal.

5. Point of entry electricity metering device (1) according to any of the claims 1 to 4 **characterized in that** the power rate costs (EUR) enclose relative or absolute time-values and/or time schedules of costs for power rates and/or a list of point of times for change of power rate costs, and/or in combination with an indication of direction of change.

6. Point of entry electricity metering device (1) according to any of the claims 1 to 5 **characterized in that** an internal communication terminal (30) has a terminal unit (T) selected from the group consisting of CDMA-terminal, WIMAX-terminal, WLAN-terminal, powerline-terminal .

7. Point of entry electricity metering device (1) according to any of the claims 1 to 6 **characterized in that** a measuring unit (40) is adapted for measuring a power consumption P of the metered user area (2) and a measuring unit signal interface (41) is adapted for transmitting data of power consumption (P) of the metered user area (2) to the communication module signal interface (13).

8. Point of entry electricity metering device (1) according to any of the claims 1 to 7 **characterized in that** a holder (42) is configured for insertion of the communication module and at least for one of the features selected from:
- for providing power to the communication module;
- for providing the internal communication interface adapted for communicating the data of power rate costs and the physical identifying feature;
- for providing the signal interface adapted for receiving a power consumption signal.

9. Point of entry electricity metering device (1) according to any of the claims 1 to 8 **characterized by** a control unit (50) having an input/output terminal (51, 52) for receiving/displaying user settings and power consumption related data.

10. Point of entry electricity metering device (1) according to any of the claims 1 to 9
**characterized in that** the provider side transmitter circuitry (12) is adapted for transmitting data of power consumption (P) of the metered user area (2) and/or the physical identifying feature (ID) for the point of entry electricity metering device (1) via a dedicated signal of the mobile communication network (7), and the provider side receiver circuitry (11) is adapted for receiving data of power rate costs (EUR) from the provider platform (6) via a non-dedicated signal of the mobile communication network.

11. Point of entry electricity metering device (1) of claim 10 **characterized in that** the physical identifying feature (ID) for the point of entry electricity metering device (1) distinctly identifies said point of entry electricity metering device (1) from a further point of entry electricity metering device assigned to a further metered user area of the electricity grid (3).

12. Point of entry electricity metering device (1) of claim 10 or 11 **characterized in that** the physical identifying feature (ID) for the point of entry electricity metering device (1) forms a privacy means key.

13. Point of entry electricity metering device (1) of the claims 10 to 12 **characterized in that** the communication module (10) has a coding unit wherein the physical identifying feature (ID) is codable and/or encodable and wherein the internal communication interface (43) and/or the receiver- and/or transmitter-circuitry (11, 12) is adapted to communicate the physical identifying feature (ID) in coded form.

14. Point of entry electricity metering device (1) according to claim 13, wherein the circuitry (11, 12) is adapted to transmit the physical identifying feature (ID) to the provider platform (6) and/or to the point of entry metering device (1) in coded form.

15. Point of entry electricity metering device (1) according to any of the claims 10 to 14 **characterized in that** the physical identifying feature (ID) is one of the features selected from: a grid number of the point of entry electricity metering device, a dedicated number of a power provider a contract-, a customer- or the like number of the power provider.

16. Point of entry electricity metering device (1) according to any of the claims 10 to 15 **characterized in that** the dedicated signal is transmitted in a DCCH and/or the non-dedicated signal is received in a BCCH.

17. Point of entry electricity metering device (1) according to any of the claims 10 to 16 **characterized in that** the mobile telephone communication network (7) is a GSM, UMTS or the like network for mobile communication.

18. Point of entry electricity metering device (1) according to any of the claims 10 to 17 **characterized in that** the transmitter- and/or receiver-circuitry (11, 12) is adapted for communication via the internet.

19. Point of entry electricity metering device (1) according to any of the claims 10 to 18 **characterized in that** the communication module (10) is inserted by means for insertion into a holder (42) of the point of entry electricity metering device (1) or a power consumption device (4).

20. Metering system (100) of a metered user area (2) comprising a point of entry electricity metering device (1) according to any of the claims 1 to 19 and at least one consumption device (4) of said metered user area (2) connected by electric connection wiring means (5) to an electricity grid (3) and to said point of entry electricity metering device (1), wherein the at least one consumption device (4) has
- a receiver circuitry (4"') for receiving the data of power rate costs (EUR) and the physical identifying feature (ID), and
- a logic unit (4") for triggering, in particular effecting start or stop, power consumption, in particular for interpreting a trigger message (9").

21. Method for self-organized regulating a power consumption via a point of entry electricity metering device (1) in a metered user area (2) of an electricity grid (3), the grid (3) having a plurality of further metered user areas (2') with a plurality of further point of entry electricity metering devices (2'), wherein in said metered user area at least one power consumption device (4) is positioned in circuit line connection (5) to the electricity grid (3), **characterized by** means of a communication module (10) in the point of entry electricity metering device (1) of one of claims 10 to 20, wherein
- a power consumption signal (P) of said metered user area (2) is received,
- data of power consumption (P) of the metered user area (2) and a physical identifying feature (ID) for the point of entry electricity metering device (1) are transmitted to an electricity provider platform (6) via a mobile communication network (7),
- data of power rate costs (EUR) are received from the electricity provider platform (6) via the mobile communication network (7),
- a signal (9) carrying the data of power rate costs (EUR) is converted into an internal form of signal (9') carrying the data of power rate costs (EUR) and the physical identifying feature (ID) for the point of entry electricity metering device (1),
- the data of power rate costs (EUR) and the physical identifying feature (ID) for the point of entry electricity metering device (1) are communicated to the at least one power consumption device (4).

22. Method of claim 21 **characterized in that** the data of power rate costs (EUR) are evaluated in the point of entry electricity metering device (1) and are communicated to the at least one power consumption device (4) by triggering a self-organized power consumption.

## Patentansprüche

1. Eingangspunkt-Leistungsmessgerät (1) eines Nutzermessbereichs (2), das an ein Elektrizitätsversorgungsnetz (3) anschließbar ist, wobei das Netz (3) eine Vielzahl an weiteren Nutzermessbereichen (2') mit einer Vielzahl an weiteren Eingangspunkt-Leistungsmessgeräten aufweist, wobei in dem Nutzermessbereich (2) mindestens eine Leistungsverbrauchsvorrichtung (4) in Leitungsverbindung (5) mit dem Elektrizitätsversorgungsnetz (3) angeordnet werden kann und das Eingangspunkt-Leistungsmessgerät (1) Folgendes aufweist:
- eine elektrische Verbindung (5"') mit dem Elektrizitätsversorgungsnetz (3) und mit der mindestens einen Leistungsverbrauchsvorrichtung (4) des Nutzermessbereichs (2),
- ein Kommunikationsmodul (10) für das Eingangspunkt-Leistungsmessgerät (1) des mit einem Elektrizitätsversorgungsnetz (3) verbundenen Nutzermessbereichs (2), das Folgendes aufweist:
- eine Signalschnittstelle (13), die dazu ausgelegt ist, ein Leistungsverbrauchssignal (P) für den Nutzermessbereich (2) von dem Eingangspunkt-Leistungsmessgerät (1) des Nutzermessbereichs (2) zu empfangen,
- eine stromanbieterseitige Empfänger- und/oder Senderschaltungsanordnung (11, 12), wobei
die Empfängerschaltungsanordnung (11) dazu ausgelegt ist, Daten zu Leistungsratenkosten (EUR) von einer Anbieterplattform (6) zu empfangen,
die Senderschaltungsanordnung (12) dazu ausgelegt ist, Leistungsverbrauchsdaten (P) des Nutzermessbereichs (2) zur Anbieterplattform (6) zu senden,
- eine interne Kommunikationsschnittstelle (43) für die Kommunikation von Daten mit dem Eingangspunkt-Leistungsmessgerät (1), wobei
- die Empfänger- und/oder Senderschaltungsanordnung (11, 12) für die Kommunikation über ein mobiles Kommunikationsnetz (7) ausgelegt ist und
- die Senderschaltungsanordnung (11, 12) dazu ausgelegt ist, ein physikalisches Kennungsmerkmal (ID) für das Eingangspunkt-Leistungsmessgerät (1) in Kombination mit den Leistungsverbrauchsdaten (P) des Nutzermessbereichs (2) so zu senden, dass das Eingangspunkt-Leistungsmessgerät (1) identifizierbar ist und dem Nutzermessbereich (2) zugeordnet werden kann, und
- die interne Kommunikationsschnittstelle (43) zur Übermittlung der Daten zu den Leistungsratenkosten (EUR) und des physikalischen Kennungsmerkmals (ID) zum Eingangspunkt-Leistungsmessgerät (1) ausgelegt ist,
- eine Anwendungsschicht (20) zur Umwandlung eines internen Signals (9') von dem Kommunikationsmodul (10) zu einem internen Kommunikationsendgerät (30) ausgelegt ist, wobei
- das interne Kommunikationsendgerät (30) dazu ausgelegt ist, die Daten zu den Leistungsratenkosten (EUR) und das physikalische Kennungsmerkmal (ID) zwischen der Anwendungsschicht (20) und der mindestens einen Leistungsverbrauchsvorrichtung (4) des Nutzermessbereichs (2) zu übermitteln.

2. Eingangspunkt-Leistungsmessgerät (1) nach Anspruch 1, **dadurch gekennzeichnet, dass** die Anwendungsschicht (20) eine Anwendungsverarbeitungseinheit (A) umfasst, die eine Auswertelogik (EVAL) zum Auswerten der Daten zu den Leistungsratenkosten (EUR) aufweist und eine Auslösemeldung (9") zum Auslösen eines Leistungsverbrauchs der Leistungsverbrauchsvorrichtung (4) bereitstellt.

3. Eingangspunkt-Leistungsmessgerät (1) nach Anspruch 1 oder 2, **dadurch gekennzeichnet, dass** die Anwendungsschicht (20) eine Anwendungsverarbeitungseinheit (A) mit einer Umwandlungseinheit (CONV) zum Umwandeln eines Signals (9) in Form eines Signals eines mobilen Kommunikationsnetzes in ein Signal (9') in Form eines internen Signals umfasst.

4. Eingangspunkt-Leistungsmessgerät (1) nach Anspruch 3, **dadurch gekennzeichnet, dass** die interne Signalform eines Signals (9') auf eine Form eines Signals abgestimmt ist, das aus der Gruppe ausgewählt ist, die aus Folgendem besteht:
- einem stromnetzbasierten Signal, einem WIMAX-Signal, einem WLAN-Signal und einem Signal eines mobilen Kommunikationsnetzes.

5. Eingangspunkt-Leistungsmessgerät (1) nach einem der Ansprüche 1 bis 4, **dadurch gekennzeichnet, dass** die Leistungsratenkosten (EUR) relative oder absolute Zeitwerte und/oder Zeitpläne von Kosten für Leistungsraten und/oder eine Liste mit Zeitpunkten, an denen sich die Leistungsratenkosten ändern, und/oder dies in Kombination mit einer Angabe zur Änderungsrichtung umfassen.

6. Eingangspunkt-Leistungsmessgerät (1) nach einem der Ansprüche 1 bis 5, **dadurch gekennzeichnet, dass** ein internes Kommunikationsendgerät (30) eine Endgeräteeinheit (T) umfasst, die aus der aus einem CDMA-Endgerät, einem WIMAX-Endgerät, einem WLAN-Endgerät und einem Stromnetzendgerät bestehenden Gruppe ausgewählt ist.

7. Eingangspunkt-Leistungsmessgerät (1) nach einem der Ansprüche 1 bis 6, **dadurch gekennzeichnet, dass** eine Messeinheit (40) dazu ausgelegt ist, einen Leistungsverbrauch (P) des Nutzermessbereichs (2) zu messen und eine Messeinheitssignalschnittstelle (41) dazu ausgelegt ist, Daten zum Leistungsverbrauch (P) des Nutzermessbereichs (2) zur Kommunikationsmodulsignalschnittstelle (13) zu übertragen.

8. Eingangspunkt-Leistungsmessgerät (1) nach einem der Ansprüche 1 bis 7, **dadurch gekennzeichnet, dass** ein Halter (42) zum Einsetzen des Kommunikationsmoduls und zumindest für eines der Merkmale ausgeführt ist, die aus Folgendem ausgewählt sind:
- Bereitstellung von Energie für das Kommunikationsmodul;
- Bereitstellung der internen Kommunikationsschnittstelle, die dazu ausgelegt ist, die Daten zu den Leistungsratenkosten und das physikalische Kennungsmerkmal zu übermitteln;
- Bereitstellung der Signalschnittstelle, die dazu ausgelegt ist, ein Leistungsverbrauchssignal zu empfangen.

9. Eingangspunkt-Leistungsmessgerät (1) nach einem der Ansprüche 1 bis 8, **gekennzeichnet durch** eine Steuereinheit (50) mit einem Eingangs-/ Ausgangsanschluss (51, 52) zum Empfangen/Anzeigen von Nutzereinstellungen und leistungsverbrauchsbezogenen Daten.

10. Eingangspunkt-Leistungsmessgerät (1) nach einem der Ansprüche 1 bis 9, **dadurch gekennzeichnet, dass** die anbieterseitige Senderschaltungsanordnung (12) dazu ausgelegt ist, Daten zum Leistungsverbrauch (P) des Nutzermessbereichs (2) und/oder das physikalische Kennungsmerkmal (ID) für das Eingangspunkt-Leistungsmessgerät (1) über ein dediziertes Signal des mobilen Kommunikationsnetzes (7) zu senden, und die anbieterseitige Empfängerschaltungsanordnung (11) dazu ausgelegt ist, Daten zu den Leistungsratenkosten (EUR) von der Anbieterplattform (6) über ein nichtdediziertes Signal des mobilen Kommunikationsnetzes zu empfangen.

11. Eingangspunkt-Leistungsmessgerät (1) nach Anspruch 10, **dadurch gekennzeichnet, dass** das physikalische Kennungsmerkmal (ID) für das Eingangspunkt-Leistungsmessgerät (1) das Eingangspunkt-Leistungsmessgerät (1) eindeutig von einem weiteren Eingangspunkt-Leistungsmessgerät identifiziert, das einem weiteren Nutzermessbereich des Elektrizitätsversorgungsnetzes (3) zugeordnet ist.

12. Eingangspunkt-Leistungsmessgerät (1) nach Anspruch 10 oder 11, **dadurch gekennzeichnet, dass** das physikalische Kennungsmerkmal (ID) für das Eingangspunkt-Leistungsmessgerät (1) einen Schlüssel für Geheimhaltungsmittel bildet.

13. Eingangspunkt-Leistungsmessgerät (1) nach den Ansprüchen 10 bis 12, **dadurch gekennzeichnet, dass** das Kommunikationsmodul (10) eine Kodierungseinheit aufweist, bei der das physikalische Kennungsmerkmal (ID) als Code angegeben wird und/oder kodiert werden kann und die interne Kommunikationsschnittstelle (43) und/oder die Empfänger- und/oder Senderschaltungsanordnung (11, 12) dazu ausgelegt ist, das physikalische Kennungsmerkmal (ID) in kodierter Form zu übermitteln.

14. Eingangspunkt-Leistungsmessgerät (1) nach Anspruch 13, bei dem die Schaltungsanordnung (11, 12) dazu ausgelegt ist, das physikalische Kennungsmerkmal (ID) in kodierter Form zur Anbieterplattform (6) und/oder zum Eingangspunkt-Messgerät (1) zu übertragen.

15. Eingangspunkt-Leistungsmessgerät (1) nach einem der Ansprüche 10 bis 14, **dadurch gekennzeichnet, dass** das physikalische Kennungsmerkmal (ID) ein aus den folgenden Merkmalen ausgewähltes Merkmal ist: eine Netznummer des Eingangspunkt-Leistungsmessgeräts, eine dedizierte Nummer des Stromanbieters, eine Vertragsnummer, Kundennummer oder dergleichen des Stromanbieters.

16. Eingangspunkt-Leistungsmessgerät (1) nach einem der Ansprüche 10 bis 15, **dadurch gekennzeichnet, dass** das dedizierte Signal in einem DCCH gesendet und/oder das nicht-dedizierte Signal in einem BCCH empfangen wird.

17. Eingangspunkt-Leistungsmessgerät (1) nach einem der Ansprüche 10 bis 16, **dadurch gekennzeichnet, dass** das Mobiltelefonkommunikationsnetz (7) ein GSM-Netz, UMTS-Netz oder dergleichen für mobile Kommunikation ist.

18. Eingangspunkt-Leistungsmessgerät (1) nach einem der Ansprüche 10 bis 17, **dadurch gekennzeichnet, dass** die Sender- und/oder Empfängerschaltungsanordnung (11, 12) für die Kommunikation via Internet ausgelegt ist.

19. Eingangspunkt-Leistungsmessgerät (1) nach einem der Ansprüche 10 bis 18, **dadurch gekennzeichnet, dass** das Kommunikationsmodul (10) mittels Einführungsmitteln in einen Halter (42) des Eingangspunkt-Leistungsmessgeräts (1) oder eine Leistungsverbrauchsvorrichtung (4) eingefügt ist.

20. Messsystem (100) eines Nutzermessbereichs (2), das ein Eingangspunkt-Leistungsmessgerät (1) nach einem der Ansprüche 1 bis 19 und mindestens eine Verbrauchsvorrichtung (4) des Nutzermessbereichs (2) aufweist, welche mittels elektrischer Kabelverbindung (5) mit einem Elektrizitätsversorgungsnetz (3) und mit dem Eingangspunkt-Leistungsmessgerät (1) verbunden ist, wobei die mindestens eine Verbrauchsvorrichtung (4) Folgendes aufweist:
- eine Empfängerschaltungsanordnung (4"') zum Empfangen der Daten zu den Leistungsratenkosten (EUR) und des physikalischen Kennungsmerkmals (ID) und
- eine Logikeinheit (4") zum Auslösen, insbesondere zur Herbeiführung eines Starts oder Stopps eines Leistungsverbrauchs, insbesondere zum Interpretieren einer Auslösemeldung (9").

21. Verfahren für das selbstorganisierte Regulieren eines Leistungsverbrauchs über ein Eingangspunkt-Leistungsmessgerät (1) in einem Nutzermessbereich (2) eines Elektrizitätsversorgungsnetzes (3), wobei das Netz (3) eine Vielzahl an weiteren Nutzermessbereichen (2') mit einer Vielzahl an weiteren Eingangspunkt-Leistungsmessgeräten (2') aufweist, wobei in dem Nutzermessbereich mindestens eine Leistungsverbrauchsvorrichtung (4) in Leitungsverbindung (5) mit dem Elektrizitätsversorgungsnetz (3) angeordnet ist, **gekennzeichnet durch** ein Kommunikationsmodul (10) in dem Eingangspunkt-Leistungsmessgerät (1) nach einem der Ansprüche 10 bis 20, wobei
- ein Leistungsverbrauchssignal (P) des Nutzermessbereichs (2) empfangen wird,
- Leistungsverbrauchsdaten (P) des Nutzermessbereichs (2) und ein physikalisches Kennungsmerkmal (ID) für das Eingangspunkt-Leistungsmessgerät (1) über ein mobiles Kommunikationsnetz (7) zu einer Stromanbieterplattform (6) übertragen werden,
- Daten zu den Leistungsratenkosten (EUR) von der Stromanbieterplattform (6) über das mobile Kommunikationsnetz (7) empfangen werden,
- ein Signal (9), das die Daten zu den Leistungsratenkosten (EUR) befördert, in Form eines internen Signals (9') umgewandelt wird, das die Daten zu den Leistungsratenkosten (EUR) und das physikalische Kennungsmerkmal (ID) für das Eingangspunkt-Leistungsmessgerät (1) befördert,
- die Daten zu den Leistungsratenkosten (EUR) und das physikalische Kennungsmerkmal (ID) für das Eingangspunkt-Leistungsmessgerät (1) zu der mindestens einen Leistungsverbrauchsvorrichtung (4) übermittelt werden.

22. Verfahren nach Anspruch 21, **dadurch gekennzeichnet, dass** die Daten zu den Leistungsratenkosten (EUR) in dem Eingangspunkt-Leistungsmessgerät (1) ausgewertet und durch Auslösen eines selbstorganisierten Leistungsverbrauchs zu der mindestens einen Leistungsverbrauchsvorrichtung (4) übermittelt werden.

## Revendications

1. Compteur électrique de point d'entrée (1) d'une zone d'utilisateur relevée (2) pouvant être connectée à un réseau électrique (3), le réseau (3) comportant une pluralité d'autres zones d'utilisateur relevées (2') avec une pluralité d'autres compteurs électriques de point d'entrée, dans lequel, dans ladite zone d'utilisateur relevée (2), au moins un dispositif de consommation d'énergie (4) peut être positionné en une connexion de ligne de circuit (5) au réseau électrique (3) et ledit compteur électrique de point d'entrée (1) comportant :
- une connexion électrique (5"') au réseau électrique (3) et au dit au moins un dispositif de consommation d'énergie (4) de ladite zone d'utilisateur relevée (2)
- un module de communication (10), pour le compteur électrique de point d'entrée (1) de la zone d'utilisateur relevée (2) connectée à un réseau électrique (3), comportant :
- une interface de signal (13) apte à recevoir un signal de consommation d'énergie (P) pour ladite zone d'utilisateur relevée (2) du compteur électrique de point d'entrée (1) de ladite zone d'utilisateur relevée (2) ;
- des éléments de circuit de réception et/ou d'émission côté fournisseur d'électricité (11, 12), dans lequel
les éléments de circuit de réception (11) sont aptes à recevoir des données de tarifs d'énergie (EUR) d'une plateforme de fournisseur (6),
les éléments de circuit d'émission (12) sont aptes à transmettre des données de consommation d'énergie (P) de la zone d'utilisateur relevée (2) à la plateforme de fournisseur (6) ;
- une interface de communication interne (43) pour échanger des données avec le compteur électrique de point d'entrée (1) ; dans lequel
- les éléments de circuit de réception et/ou d'émission (11, 12) sont aptes à communiquer par l'intermédiaire d'un réseau de communication mobile (7), et
- les éléments de circuit d'émission (11, 12) sont aptes à transmettre une caractéristique d'identification physique (ID) pour le compteur électrique de point d'entrée (1) en combinaison avec les données de consommation d'énergie (P) de la zone d'utilisateur relevée (2) de sorte que le compteur électrique de point d'entrée (1) soit identifiable et attribuable à la zone d'utilisateur relevée (2), et
- l'interface de communication interne (43) est apte à communiquer les données de tarifs d'énergie (EUR) et la caractéristique d'identification physique (ID) au compteur électrique de point d'entrée (1) ;
- une couche d'application (20) pour convertir un signal interne (9') du module de communication (10) vers un terminal de communication interne (30), dans lequel
- le terminal de communication interne (30) est apte à échanger les données de tarifs d'énergie (EUR) et la caractéristique d'identification physique (ID) entre la couche d'application (20) et ledit au moins un dispositif de consommation d'énergie (4) de la zone d'utilisateur relevée (2).

2. Compteur électrique de point d'entrée (1) selon la revendication 1, **caractérisé en ce que** la couche d'application (20) comprend une unité de traitement d'application (A) comportant une logique d'évaluation (EVAL) pour évaluer des données de tarifs d'énergie (EUR) et fournir un message de déclenchement (9") pour déclencher une consommation d'énergie du dispositif de consommation d'énergie (4).

3. Compteur électrique de point d'entrée (1) selon la revendication 1 ou 2, **caractérisé en ce que** la couche d'application (20) comprend une unité de traitement d'application (A) comportant une unité de conversion (CONV) pour convertir un format de réseau de communication mobile d'un signal (9) en un format interne d'un signal (9').

4. Compteur électrique de point d'entrée (1) selon la revendication 3, **caractérisé en ce que** la forme interne d'un signal (9') est adaptée à une forme d'un signal sélectionné dans le groupe consistant en :
- un signal de courant porteur en ligne, un signal WIMAX, un signal WLAN, un signal de réseau de communication mobile.

5. Compteur électrique de point d'entrée (1) selon l'une quelconque des revendications 1 à 4, **caractérisé en ce que** les tarifs d'énergie (EUR) englobent des valeurs en temps relatif ou absolu et/ou des planifications horaires de tarifs d'énergie et/ou une liste d'instants de changement de tarifs d'énergie, et/ou en combinaison avec une indication de direction de changement.

6. Compteur électrique de point d'entrée (1) selon l'une quelconque des revendications 1 à 5, **caractérisé en ce qu'**un terminal de communication interne (30) comporte une unité de terminal (T) sélectionnée dans le groupe comprenant un terminal CDMA, un terminal WIMAX, un terminal WLAN, un terminal de ligne de puissance.

7. Compteur électrique de point d'entrée (1) selon l'une quelconque des revendications 1 à 6, **caractérisé en ce qu'**une unité de mesure (40) est apte à mesurer une consommation d'énergie P de la zone d'utilisateur relevée (2) et une interface de signal d'unité de mesure (41) est apte à transmettre des données de consommation d'énergie (P) de la zone d'utilisateur relevée (2) à l'interface de signal de module de communication (13).

8. Compteur électrique de point d'entrée (1) selon l'une quelconque des revendications 1 à 7, **caractérisé en ce qu'**un support (42) est configuré pour l'insertion du module de communication et au moins pour une des caractéristiques sélectionnée parmi :
- la fourniture de puissance au module de communication ;
- la fourniture de l'interface de communication interne apte à communiquer les données de tarifs d'énergie et la caractéristique d'identification physique ;
- la fourniture de l'interface de signal apte à recevoir un signal de consommation d'énergie.

9. Compteur électrique de point d'entrée (1) selon l'une quelconque des revendications 1 à 8, **caractérisé par** une unité de commande (50) comportant un terminal d'entrée/sortie (51, 52) pour recevoir/afficher des réglages d'utilisateur et des données associées à la consommation d'énergie.

10. Compteur électrique de point d'entrée (1) selon l'une quelconque des revendications 1 à 9, **caractérisé en ce que** les éléments de circuit d'émission côté fournisseur (12) sont aptes à transmettre des données de consommation d'énergie (P) de la zone d'utilisateur relevée (2) et/ou la caractéristique d'identification physique (ID) pour le compteur électrique de point d'entrée (1) par l'intermédiaire d'un signal dédié du réseau de communication mobile (7), et les éléments de circuit de réception côté fournisseur (11) sont aptes à recevoir des données de tarifs d'énergie (EUR) de la plateforme de fournisseur (6) par l'intermédiaire d'un signal non dédié du réseau de communication mobile.

11. Compteur électrique de point d'entrée (1) selon la revendication 10, **caractérisé en ce que** la caractéristique d'identification physique (ID) pour le compteur électrique de point d'entrée (1) identifie distinctement ledit compteur électrique de point d'entrée (1) d'un autre compteur électrique de point d'entrée attribué à une autre zone d'utilisateur relevée du réseau électrique (3).

12. Compteur électrique de point d'entrée (1) selon la revendication 10 ou 11, **caractérisé en ce que** la caractéristique d'identification physique (ID) pour le compteur électrique de point d'entrée (1) forme une clé de confidentialité.

13. Compteur électrique de point d'entrée (1) selon les revendications 10 à 12, **caractérisé en ce que** le module de communication (10) comporte une unité de codage dans laquelle la caractéristique d'identification physique (ID) peut être codée et/ou encodée, et dans lequel l'interface de communication interne (43) et/ou les éléments de circuit de réception et/ou d'émission (11, 12) sont aptes à communiquer la caractéristique d'identification physique (ID) sous format codé.

14. Compteur électrique de point d'entrée (1) selon la revendication 13, dans lequel les éléments de circuit (11, 12) sont aptes à transmettre la caractéristique d'identification physique (ID) à la plateforme de fournisseur (6) et/ou au compteur de point d'entrée (1) en une forme codée.

15. Compteur électrique de point d'entrée (1) selon l'une quelconque des revendications 10 à 14, **caractérisé en ce que** la caractéristique d'identification physique (ID) est l'une des caractéristiques sélectionnées parmi : un numéro de réseau du compteur électrique de point d'entrée, un numéro dédié d'un fournisseur d'énergie, un numéro de contrat, de client ou similaire du fournisseur d'énergie.

16. Compteur électrique de point d'entrée (1) selon l'une quelconque des revendications 10 à 15, **caractérisé en ce que** le signal dédié est transmis dans un canal DCCH et/ou le signal non dédié est reçu dans un canal BCCH.

17. Compteur électrique de point d'entrée (1) selon l'une quelconque des revendications 10 à 16, **caractérisé en ce que** le réseau de communication téléphonique mobile (7) est un réseau GSM, UMTS ou similaire de communication mobile.

18. Compteur électrique de point d'entrée (1) selon l'une quelconque des revendications 10 à 17, **caractérisé en ce que** les éléments de circuit d'émission et/ou de réception (11, 12) sont aptes à communiquer par l'intermédiaire d'Internet.

19. Compteur électrique de point d'entrée (1) selon l'une quelconque des revendications 10 à 18, **caractérisé en ce que** le module de communication (10) est inséré dans des moyens d'insertion d'un support (42) du compteur électrique de point d'entrée (1) ou d'un dispositif de consommation d'énergie (4).

20. Système de comptage (100) d'une zone d'utilisateur relevée (2) comprenant un compteur électrique de point d'entrée (1) selon l'une quelconque des revendications 1 à 19 et au moins un dispositif de consommation (4) de ladite zone d'utilisateur relevée (2) connecté par des moyens de câblage de connexion électrique (5) à un réseau électrique (3) et au dit compteur électrique de point d'entrée (1), dans lequel ledit au moins un dispositif de consommation (4) comporte :
- des éléments de circuit de réception (4"') pour recevoir les données de tarifs d'énergie (EUR) et la caractéristique d'identification physique (ID), et
- une unité logique (4") pour déclencher, en effectuant en particulier un démarrage ou un arrêt, une consommation d'énergie, en particulier pour interpréter un message de déclenchement (9").

21. Procédé de régulation auto-organisée d'une consommation d'énergie par l'intermédiaire d'un compteur électrique de point d'entrée (1) dans une zone d'utilisateur relevée (2) d'un réseau électrique (3), le réseau (3) comportant une pluralité d'autres zones d'utilisateur relevées (2') avec une pluralité d'autres compteurs électriques de point d'entrée (2'), dans lequel, dans ladite zone d'utilisateur relevée, au moins un dispositif de consommation d'énergie (4) est positionné en une connexion de ligne de circuit (5) au réseau électrique (3), caractérisé au moyen d'un module de communication (10) dans le compteur électrique de point d'entrée (1) de l'une des revendications 10 à 20, dans lequel
- un signal de consommation d'énergie (P) de ladite zone d'utilisateur relevée (2) est reçu,
- des données de consommation d'énergie (P) de la zone d'utilisateur relevée (2) et une caractéristique d'identification physique (ID) pour le compteur électrique de point d'entrée (1) sont transmises à une plateforme de fournisseur d'électricité (6) par l'intermédiaire d'un réseau de communication mobile (7),
- des données de tarifs d'énergie (EUR) sont reçues de la plateforme de fournisseur d'électricité (6) par l'intermédiaire du réseau de communication mobile (7),
- un signal (9) transportant les données de tarifs d'énergie (EUR) est converti en une forme interne d'un signal (9') transportant les données de tarifs d'énergie (EUR) et la caractéristique d'identification physique (ID) pour le compteur électrique de point d'entrée (1),
- les données de tarifs d'énergie (EUR) et la caractéristique d'identification physique (ID) pour le compteur électrique de point d'entrée (1) sont communiquées au dit au moins un dispositif de consommation d'énergie (4).

22. Procédé selon la revendication 21, **caractérisé en ce que** les données de tarifs d'énergie (EUR) sont évaluées dans le compteur électrique de point d'entrée (1) et sont communiquées au dit au moins un dispositif de consommation d'énergie (4) en déclenchant une consommation d'énergie auto-organisée.
